# FASCICULE DE BREVET EUROPEEN

(11) **EP 0 977 649 B1**
(45) Date de publication et mention de la délivrance du brevet: **06.11.2002**
(21) Numéro de dépôt: 98910794.1
(22) Date de dépôt: 20.02.1998
(51) Int. Cl.: B23K 37/04

(54) **PROCEDE DE MISE EN PLACE DE DEUX FLANS DE TOLE POUR ETRE SOUDES BORD A BORD PAR UN FAISCEAU A HAUTE DENSITE D'ENERGIE**
VERFAHREN ZUR POSITIONIERUNG ZWEIER BLECHE ZUM STUMPFANEINANDERSCHWEISSEN MITTELS EINES HOCHENERGETISCHEN DICHTESTRAHLS
METHOD FOR POSITIONING TWO SHEET METAL BLANKS TO BE ABUTTED BY WELDING BY A HIGH ENERGY DENSITY BEAM

(43) Date de publication de la demande: 09.02.2000
(73) Titulaire: RENAULT AUTOMATION COMAU, 92365 Meudon la Forêt, Cedex (FR)
(72) Inventeur: FONTAINE, Patrick, F-91620 Nozay (FR)
(74) Mandataire: Robert, Jean-Pierre
(86) Numéro de dépôt international: FR9800331
(87) Numéro de publication internationale: WO99042243

(56) Documents cités:
- EP-A- 0 664 183
- DE-A- 1 951 520

## Description

La présence invention concerne le soudage par faisceau à haute densité d'énergie (faisceau laser par exemple) de deux flans de tôle bord à bord.

On sait que pour réaliser un tel soudage, il faut une grande précision dans la position relative des tôles à rabouter. On doit en effet rendre minimal le jeu pouvant exister entre les deux bords en contact car, lorsque ce jeu est trop important, il se produit un effondrement du bain de métal liquide et une soudure à cet endroit de mauvaise qualité.

L'un des moyens pour obtenir le jeu minimal est de soigner la position relative des flans lorsqu'ils sont accostés. Dans une technique connue par le document EP-A-0 664 183, on place l'un des flans entres deux mâchoires ouvertes avec le bord à souder au contact d'une butée (règle) de référence qui se trouve à l'aplomb de la trajectoire du faisceau par rapport au flan. On serre ensuite les mâchoires pour immobiliser le flan et on escamote la règle. Le bord du flan immobilisé constitue alors une butée pour le bord de l'autre flan. Celui-ci est donc glissé entre deux autres mâchoires ouvertes contre le bord du premier flan, et les mâchoires sont serrées. On applique enfin un effort latéral sur les mâchoires de serrage du second flan, sensiblement perpendiculaire au bord.

Dans une version plus élaborée de cette technique connue, la seconde paire de mâchoires est en fait divisée en plusieurs paires de mâchoires, ce qui permet de moduler l'intensité de l'effort latéral pour prendre en compte les irrégularités géométriques de la zone de contact.

La présente invention propose une alternative à cette technique grâce à laquelle il est possible de réaliser un meilleur accostage des bords avec un appareillage plus simple, compte tenu par ailleurs de la meilleure qualité des découpes que l'on sait aujourd'hui réaliser.

A cet effet, l'invention a donc pour objet un procédé de mise en place de deux flans de tôle bord à bord, destinées à être raboutés par soudage, défini dans la revendication 1 selon lequel on procède à l'accostage de l'un des flans de tôle contre une butée de référence, en le déplaçant en direction de cette butée sur une distance déterminée au moyen de deux mâchoires refermées sur le flan pour développer une force de serrage du flan autorisant un glissement du flan entre elles lorsque celui-ci est parvenu au contact de la butée, et, après avoir parcouru cette distance, en augmentant la force de serrage des mâchoires sur le flan, puis on retire la butée de référence, et on procède à l'accostage du second flan contre le premier, selon la même procédure que celle d'accostage du premier flan contre la butée au moyen d'une seconde paire de mâchoires.

L'un des avantages du procédé selon l'invention réside dans la correction automatique des défauts de mise en place des flans dans le poste de soudage. Ces défauts résultent principalement des incertitudes des automates de manutention des flans au chargement du poste de soudage.

Il est possible dans une variante du procédé de l'invention d'appliquer aux mâchoires serrées sur le second flan un effort sensiblement perpendiculaire à son bord en contact avec le premier flan. On peut ainsi engendrer des déformations locales dans la zone de contact qui favorisent la réduction du jeu entre les bords accostés.

D'autres caractéristiques et avantages de l'invention ressortiront de la description d'un exemple de réalisation donné ci-après à titre indicatif.

Il sera fait référence aux dessins annexés, parmi lesquels :
- la figure 1 est une vue schématique d'un dispositif mettant en oeuvre le procédé selon l'invention;
- les figures 2 et 3 sont des vues de dessus partielles de la figure 1 illustrant l'accostage d'un premier flan de tôle contre une règle de référence.

En se reportant à ses figures, on voit que l'installation qui met en oeuvre le procédé selon l'invention comporte une table 1 sur laquelle sont montées à coulissement une première mâchoire inférieure 2 et une seconde mâchoire inférieure 3. Le déplacement de ces mâchoires 2 et 3 sur la table 1 est assuré par des vérin 4 et 5. Le dispositif comporte au-dessus de la mâchoire 2 une mâchoire supérieure 6 et au-dessus de la mâchoire 3 une mâchoire supérieure 7. Des vérins 8 et 9 permettent d'ouvrir chacune des paires de mâchoires 2, 6 et 3, 7 et de les refermer l'une contre l'autre sous un effort réglable déterminé. Les vérins 8 et 9 dans le cas de la figure sont embarqués avec les mâchoires 2, 6 et 3, 7.

En surplomb des paires de mâchoires 2, 6 et 3, 7, le dispositif comporte des vérins 10 et 11 qui sont portés par le bâti non représenté de la machine duquel est solidaire la table inférieure 1. Ces vérins 10 et 11 peuvent développer une pression au-dessus de chaque paire de mâchoires venant par exemple se substituer à la force de fermeture de chacune d'elles.

La machine comporte également une butée de référence 12 sous la forme par exemple d'une règle dont l'une des faces 12a est dans le plan d'un faisceau à haute densité d'énergie 13 issu d'une tête 14 qui servira à rabouter les flans de tôles 15 et 16 lorsqu'ils seront accostés.

Dans son état d'attente, l'installation est telle que les paires de mâchoires 2, 6 et 3, 7 sont écartées l'une de l'autre et écartées de la règle 12 par rétraction des vérins 4 et 5. Les vérins 10 et 11 sont également rétractés et la mâchoire 6 est verticalement écartée de la mâchoire 2 de même que la mâchoire 7 est verticalement écartée de la mâchoire 3 par l'action des vérins 8 et 9.

On procède ensuite à l'alimentation des flans de tôles 15 et 16 que l'on glisse soit manuellement soit à l'aide d'un manipulateur entre les mâchoires écartées 2 et 6 d'une part et 3 et 7 d'autre part. On referme tout d'abord les mâchoires 2 et 6 en serrant le flan de tôle 15 entre elles sous un effort f déterminé. On notera que les mâchoires sont garnies sur leur face en contact avec la tôle d'un matériau permettant un entraînement par friction avec la tôle et dont cependant l'état de surface est tel que le glissement peut se réaliser sans dégradation de la tôle. On actionne ensuite le déplacement des mâchoires 2 et 6 au moyen du vérin 4 en direction de la butée 12.

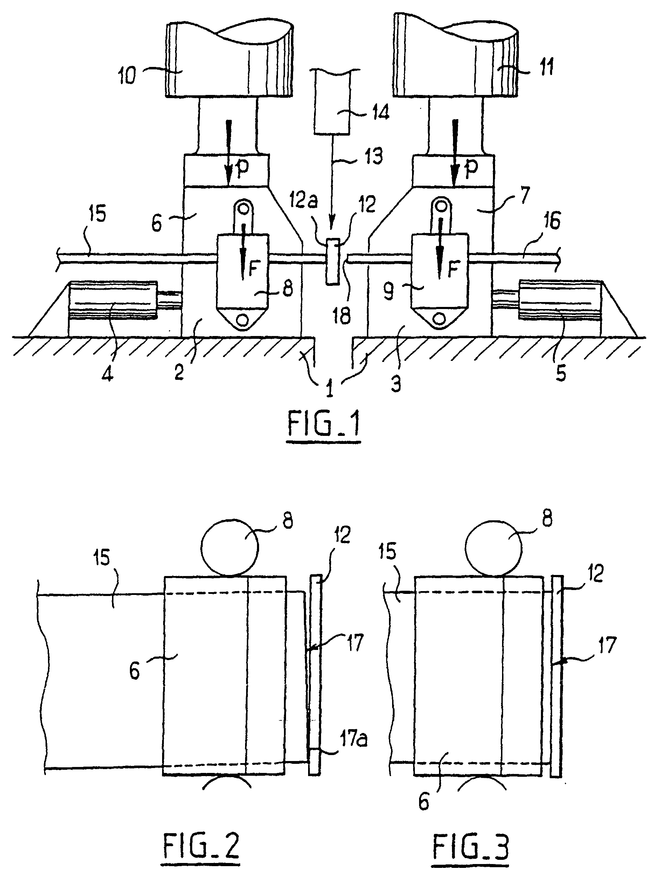

A la figure 2, on a représenté un flan 15 qui est pincé entre les mâchoires 2 et 6 en étant mal positionné. Il vient donc au contact de la butée 12, entraîné par les mâchoires 2 et 6 par une extrémité 17a de son bord 17. La poursuite du déplacement de la paire de mâchoires 2, 6 en direction de la butée 12 permet de redresser le flan 15 car l'effort f de serrage de ce flan entre les deux mâchoires est réglé de manière qu'il puisse se produire un glissement entre le flan et les mâchoires lors de leur mouvement en direction de la butée 12. Ainsi, le flan 15 peut-il pivoter autour de son extrémité 17a pour être redressé comme illustré à la figure 3. L'amplitude du déplacement des mâchoires 2 et 6 en direction de la butée 12 est telle qu'à la fin de ce déplacement chaque tôle 15 est correctement abutée contre la règle 12 quelle que soit sa position initiale (qui de toute façon ne peut varier que dans des limites restreintes). A la fin du déplacement, on exerce grâce au vérin 10 une pression p importante de maintien du flan entre les deux mâchoires 2 et 6.

Selon le procédé de l'invention, on retire la butée 12, par exemple en l'escamotant vers le bas entre les deux parties de la table 1 et on rapproche le flan 16 pincé entre les mâchoires 3 et 7 du bord 17 du flan 15 au moyen du vérin 5. De la même manière que précédemment, le bord avant 18 du flan 16 prend appui sur le bord 17 du flan 15 et le cas échéant, grâce à l'effort f de serrage des mâchoires 3 et 7 autorisant également un glissement du flan 16 entre elles, le flan 16 est redressé et le contact des bords 17 et 18 optimisé.

On applique alors grâce au vérin 11 une pression p de maintien du flan 16 ainsi mise en place.

Si besoin est, grâce au vérin 5 ou à un dispositif additionnel, on maintient une pression latérale entre les flans 15 et 16 pour presser les bords 17 et 18 l'un contre l'autre. A cet effet, le contact entre les vérins 10, 11 et les mâchoires correspondantes permettra un glissement entre eux sous l'effet de cette pression latérale.

On procède alors au raboutage des flans par soudure de leurs bords accostés.

La soudure étant réalisée, on replace l'installation dans sa position d'attente en rétractant les vérins 10 et 11, en ouvrant les mâchoires 2, 6 et 3, 7 par les vérins 8 et 9 et en écartant ces paires de mâchoires l'une de l'autre au moyen des vérins 4 et 5, ce qui permet l'évacuation de la pièce soudée.

La description qui précède n'est qu'une illustration du procédé selon l'invention. Ce dernier peut en effet être mis en oeuvre avec d'autres matériels. Ainsi les vérins 10 et 11 peuvent-ils être supprimés et les deux seuils de serrage des mâchoires obtenus par l'application de deux niveaux de pression dans les vérins 8 et 9.

Dans une autre variante, la mâchoire supérieure 6 et 7 de chaque paire peut être articulée sur un chariot portant la mâchoire inférieure respective 2 ou 3 tandis qu'un vérin agit entre ces deux mâchoires qui forment une sorte de pince.

## Revendications

1. Procédé de mise en place de deux flans (15, 16) de tôles bord à bord destinés à être raboutés par soudage, dans lequel on procède à l'accostage de l'un des flans (16) de tôle contre une butée (12) de référence en le déplaçant sur une distance déterminée en direction de cette butée (12) au moyen de mâchoires (2, 6) refermées sur le flan pour développer une force (f) de serrage du flan autorisant un glissement du flan (15) entre elles lorsque celui-ci est parvenu au contact de la butée (12) et en augmentant la force de serrage (p) des mâchoires sur le flan (15) après avoir parcouru la distance susdite, on retire la butée (12) de référence et on procède à l'accostage du second flan (16) contre le premier flan (15) selon la même procédure que celle d'accostage du premier flan (15) contre la butée (12) au moyen d'une seconde paire de mâchoires (3, 7).

2. Procédé selon la revendication 1, **caractérisé en ce qu'**on applique aux mâchoires (3, 7) serrées sur le second flan, un effort sensiblement perpendiculaire à son bord (18) en contact avec le premier flan (15).

## Patentansprüche

1. Verfahren zum Rand-an-Rand-Positionieren zweier Blechstücke (15, 16), die dazu vorgesehen sind, durch Schweißen verbunden zu werden, bei dem man eines der Blechstücke (15) längsseitig an einem Referenz-Anschlag (12) anordnet, indem man es mit Hilfe von Spannbacken (2, 6) über eine vorbestimmte Entfernung in Richtung auf den Anschlag (12) führt, wobei die Spannbacken (2, 6) das Blechstück einspannen, um eine Spannkraft (f) zu erzeugen, die ein Gleiten des Blechstücks (15) zwischen den Spannbacken ermöglicht, wenn es den Anschlag (12) berührt, und wobei die Spannkraft (p) der Spannbacken auf das Blechstück (15) verstärkt wird, nachdem die genannte Entfernung zurückgelegt ist, man den Referenz-Anschlag (12) entfernt, und man daraufhin das zweite Blechstück (16) an dem ersten Blechstück (15) mit Hilfe eines zweiten Paares von Spannbakken (3, 7) in derselben Weise längsseitig anordnet wie dies mit dem ersten Blechstück (15) an dem Anschlag (12) geschah.

2. Verfahren nach Anspruch 1, **dadurch gekennzeichnet, daß** an den Spannbacken (3, 7), die das zweite Blechstück einspannen, eine Kraft angelegt wird, die im wesentlichen senkrecht zum Rand (18) des zweiten Blechstücks wirkt, der mit dem ersten Blechstück (15) in Kontakt ist.

## Claims

1. A method of positioning two sheet-metal blanks (15, 16) edge to edge so they can be butt-welded together, in which method one of the sheet-metal blanks (16) is docked against a reference abutment (12) by being moved through a determined distance towards said abutment (12) using jaws (2, 6) that are closed on the blank so as to develop a clamping force (f) on the blank that allows the blank (15) to slip between the jaws once it has come into contact with the abutment (12), and by increasing the clamping force (p) of the jaws on the blank (15) after travelling through said distance, the reference abutment (12) is withdrawn, and the second blank (16) is docked against the first blank (15) using the same procedure as was used for docking the first blank (15) against the abutment (12), by means of a second pair of jaws (3, 7).

2. A method according to claim 1, **characterized in that** a force is applied to the jaws (3, 7) clamped on the second blank, which forces acts substantially perpendicularly to the edge (18) of the blank that is in contact with the first blank (15).
